# EUROPEAN PATENT SPECIFICATION

(11) **EP 3 477 136 B1**
(45) Date of publication and mention of the grant of the patent: **01.09.2021**
(21) Application number: 18201830.9
(22) Date of filing: 22.10.2018
(51) Int. Cl.: F16C 32/06, F16C 17/02, F16C 17/04, C23C 4/10, F01D 25/22

(54) **AIR BEARING**
LUFTLAGER
PALIER À AIR

(30) Priority: 24.10.2017 US 201715791782
(43) Date of publication of application: 01.05.2019
(73) Proprietor: Hamilton Sundstrand Corporation, Charlotte, NC 28217-4578 (US)
(72) Inventor: RANKIN, Kevin M., Windsor, CT 06095 (US); POTEET, Steven, Hamden CT 06518 (US); SMITH, Blair A., South Windsor, CT 06074 (US); FISKE, William R., Springfield, MA 01118 (US); SANTIAGO, Anthony, Simsbury, CO 06070 (US)
(74) Representative: Dehns

(56) References cited:
- EP-A1- 2 937 584
- US-A- 3 518 021
- US-A- 4 884 899
- US-A- 6 149 160
- US-A1- 2003 180 572
- US-A1- 2005 175 837
- US-A1- 2007 099 027
- US-A1- 2012 281 936
- US-A1- 2017 298 983

## Description

### BACKGROUND

This disclosure relates to an air bearing and a method of manufacturing an air bearing.

Air bearings utilize a thin film of air as a working fluid to provide a low friction load-bearing interface between surfaces. Air bearings can be used in various gas turbine engine applications, particularly in high-speed applications. Air bearings avoid traditional bearing-related problems such as friction, wear, particulates, and lubricant handling.

One particular type of air bearing is a foil air bearing, which generally includes a shaft with a flange supported by one or more stationary members, such as foils. When the shaft is spinning at high speeds, air pushes the shaft away from the foil so there is no contact between the shaft and foil, and therefore, no wear occurs on the shaft or the foil. However, during spin-up and spin-down of the airfoil, there can be minimal contact between the flange and stationary member(s), causing wear. US 2012/281936 discloses an air bearing with improved coating according to the preamble of claim 1.

### SUMMARY

The object of the invention is achieved by an air bearing having the features of claim 1 and a method of making such an air bearing with the features of claim 7. Further advantageous developments of the present invention are set out in the dependent claims.

### BRIEF DESCRIPTION OF THE DRAWINGS

Figure 1 schematically shows an air bearing with a journal and foils.
Figure 2A schematically shows an isometric view of the air bearing of Figure 1.
Figure 2B shows a side view of the air bearing of Figures 1 and 2A.
Figure 3 shows a cutaway view of the air bearing of Figure 2A along line A-A.
Figure 4 shows an example foil for an air bearing.

### DETAILED DESCRIPTION

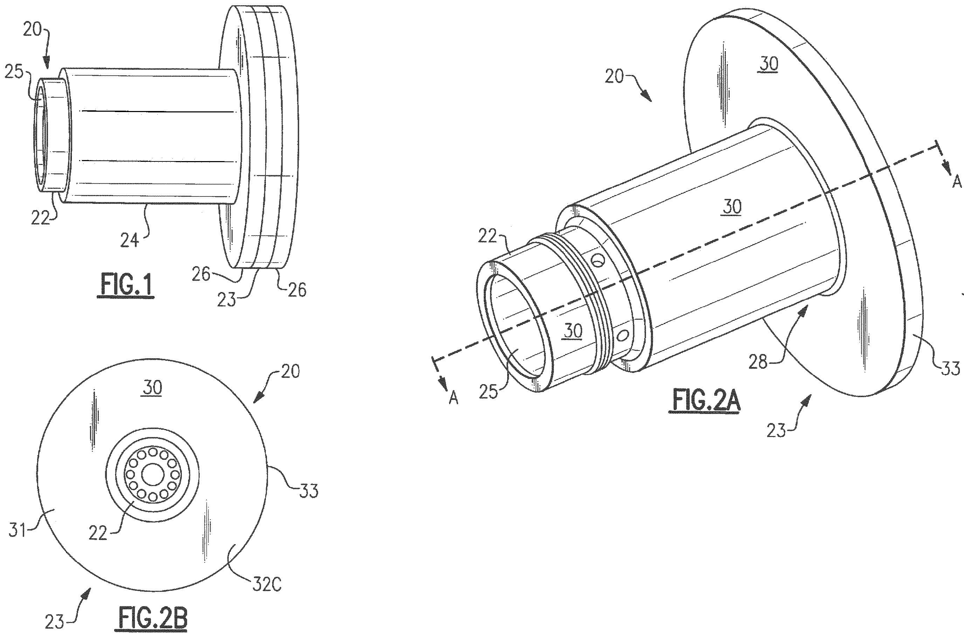

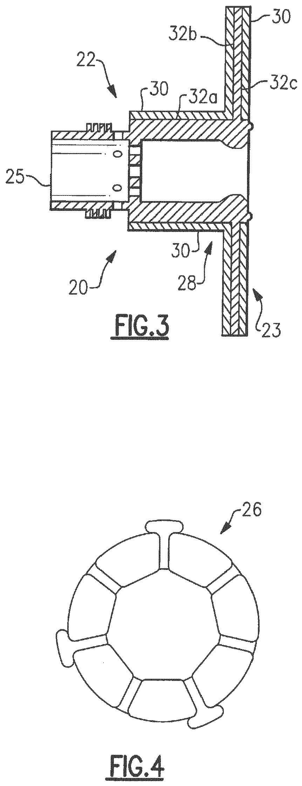

Figures 1-4 show an air bearing 20, such as an air bearing in a gas turbine engine. In the example of Figures 1-4, the air bearing 20 is a foil bearing. However, in other examples, the air bearing 20 is another type of bearing. The example air bearing 20 includes a shaft 22 with a flange 23. A journal 24 is arranged on the shaft. One or more foils 26 are arranged adjacent the flange 23, as shown in Figure 1. The foils 26 are complaint and/or spring-loaded, in some examples. The air bearing 20 rotates with respect to the members (i.e., the journal 24 and foils 26), which are held stationary in a housing (not shown), for example. When the air bearing 20 is rotating at its high operating speed, the rotation causes a thin, high-pressure film of air to form around the air bearing 20, separating it from the journal 24 and foils 26. This allows the air bearing 20 to rotate in a near frictionless manner with respect to the journal 24 and foils 26. In some examples, the air bearing 20 is made of steel.

The shaft 22 includes an opening 25, which is configured to receive a shaft (not shown), for example. The shaft can be connected to a component of a gas turbine engine or air cycle machine.

During spin-up or spin-down of the air bearing 20, that is, during times when the air bearing 20 is not rotating at its high operating speed, the shaft 22 and flange 23 come in contact with the journal 24 and/or the foils 26, and wear occurs. During spin-up, the air bearing 20 begins in a stationary position or rotating at a low speed and then rotates with increasing speed until it reaches the high operating speed. During spin-down, the air bearing 20 rotates with decreasing speed from the high operating speed to a lower speed or stationary position. Therefore, at least one of the shaft 22 and flange 23 includes a coating 30. For example, the shaft 22 includes a coating on its exterior surface. In another example, the flange 23 includes a coating on its exterior surface. The coating 30 is a hard coating that can withstand the operational environment of the air bearing 20 (which includes high temperatures and/or pressures) and withstand wear during spin-up or spin-down. When tested according to a Vickers microindentation hardness test per ASTM E384, the coating 30 has a hardness of about 600 Vickers or greater. Furthermore, the coating 30 has a sample plate wear rate of about 1.48^{∗}10⁻⁵ mm³/N/m (1^{∗}10⁻¹⁰ in³/lbf/in) or less against M50 steel when tested according to ASTM G133.

In one example, the coating 30 is free from (excludes) chromium. Chromium-based coatings have been used as hard coatings for air bearings. Chromium-based coatings are not environmentally friendly (due to the carcinogenic nature of chromium) and the application of chromium-based coatings (for example, by plating) can be expensive. Furthermore, the airfoils are coated using an organic polymer that contains fillers which are necessary to provide lubrication for the air bearing and 20), have maximum temperature thresholds of between about 232.22 to 287.78 degrees C (450 and 550 degrees F), limiting the operating environments the air bearing 20 can be placed in.

Additionally, chromium coatings are typically applied by electroplating. Electroplating can be difficult to perform on certain geometrically complex surfaces and can result in non-uniform deposition of the coating on non-flat surface geometries, such as corners, bends, or edges. In particular, electrodeposition can result in the deposition of too much coating material at edges 33 of the flange 23, and not enough coating at the intersection 28 of the shaft 22 and the flange 23. Such non-uniform coating deposition makes it difficult to meet thickness and dimensional requirements for the air bearing 20, requiring costly post-machining procedures. In some examples, the coating 30 is not applied by electrodeposition. Instead, the coating is applied by another method, such as plasma spraying, chemical vapor deposition (CVD) or physical vapor deposition (PVD). In a particular example, the coating 30 has a thickness of greater than approximately 25 microns (0.001 inch). In a particular example, the thickness of the coating 30 is between about 25 and 75 microns (0.001 and 0.003 inch).

In a particular example, not covered by the invention, the coating 30 is self-lubricating. Air bearings 20 require lubrication to facilitate rotation of shaft 22 with respect to the flange 23 during spin-up and spin-down, prior to the formation of the air film at the intersection 28 as discussed above. For instance, the flange 23 requires lubrication at one or more of surfaces 32a (which is adjacent journal 24), 32b (which is adjacent foil 26), and 32c (which is adjacent foil 26). Self-lubricating coatings eliminate the need for separate lubricants or fluorinated polymer coatings which act as lubricants. Fluorinated polymer coatings in particular cannot withstand high temperatures, limiting the operating environments the air bearing 20 can be used in. Therefore, self-lubricating coatings provide not only cost savings and a reduction in manufacturing complexity for air bearings 20, but also allow air bearings 20 to be used in a wider range of applications. An example of a self-lubricating coating is PS400, developed by NASA, which is composed of 70% by weight Nickel-Molybdenum-Aluminum binder, 20% by weight chromium oxide binder, 5% by weight silver solid lubricant, and 5% by weight BaF₂ or CaF₂ solid lubricant. PS400 can be applied by plasma spraying. PS400 can withstand temperatures of up to 498.89 degrees C (930 degrees F). Other example self-lubricating coatings 30 are chromium-free. One example is a diamond-like carbon ("DLC") coating. One example DLC coating includes silicon oxide and/or silver, and is applied by PVD. Another example DLC coating includes tungsten (tungsten carbon carbide, or WCC), and is applied by a type of PVD known as plasma assisted physical vapor deposition (PAPVD). The Tungsten-DLC coating has a thickness of about 0.0002 inches (5 microns) or less.

Another example chromium-free self-lubricating coating 30, not covered by the invention, is a boron/aluminum/magnesium ("BAM")-based (formally AlMgB₁₄, but in some examples closer to Al_{0.75}Mg_{0.75}B₁₄) coating applied by CVD, PVD, or a plasma spray process. BAM-based coatings can include dopants such as TiB₂ in some examples, or ceramic dopants in other examples.

According to the invention, the coating 30 is a tungsten-carbide-based coating. The tungsten-carbide-based coating is applied by CVD. The tungsten-carbide-based coating can withstand temperatures up to about 398.89 degrees C (750 degrees F), and provides a more abrasion- and corrosion- resistant surface than a chromium coating. The tungsten-carbide-based coating is not self-lubricating. Therefore, self-lubricating organic polymers as were generally discussed above are provided to the foil 26. The tungsten-carbide-based coating is free from chromium.

Furthermore, the foregoing description shall be interpreted as illustrative and not in any limiting sense. A worker of ordinary skill in the art would understand that certain modifications could come within the scope of this disclosure as defined in the appended claims.

## Claims

1. An air bearing (20), comprising:
a shaft (22) with a flange (23), wherein a surface of the flange (23) and a surface of the shaft (22) have a coating;
a foil (26) arranged to abut the surface of the flange (23); and
a journal (24) arranged on the shaft (22), wherein the journal (24) and the at least one foil (26) are stationary with respect to the shaft (22), and the shaft (22) is configured to rotate with respect to the journal (24) and the foil (26), and **characterized in that** the foil (26) is provided with self-lubricating organic polymers and the coating on the surface of the flange and the shaft is a tungsten-carbide-based coating.

2. The air bearing of claim 1, wherein the coating can withstand temperatures up to about 398.89 degrees C (750 degrees F).

3. The air bearing of claim 1 or 2, wherein the coating has a hardness of about 600 Vickers or greater according to a Vickers microindentation hardness test per ASTM E384.

4. The air bearing of any preceding claim, wherein the coating is greater than about 25 microns (0.001 inch) thick, and preferably wherein the coating is between about 25 and 75 microns (0.001 and 0.003 inch).

5. The air bearing of any preceding claim, wherein the air bearing (20) is configured for use in a gas turbine engine.

6. The air bearing of any preceding claim, wherein the coating is free of chromium.

7. A method of making an air bearing (20) as claimed in claim 1, the method comprising:
applying a hard wear-resistant coating to at least one of the flange and the shaft of an air bearing by one of plasma spraying, chemical vapor deposition, and physical vapor deposition, wherein the coating is a tungsten-carbide-based coating with tungsten carbide precipitates, and is applied by chemical vapor deposition, the method further comprising providing self-lubricating organic polymers on the foil.

8. The method of claim 7, wherein the coating is self-lubricating.

9. The method of claim 8, wherein the self-lubricating coating facilitates rotation of at least one of the shaft and the flange with respect to a stationary member.

10. The method of any of claims 7-9, wherein the coating is greater than about 25 microns (0.001 inch) thick.

## Patentansprüche

1. Luftlager (20), umfassend:
eine Welle (22) mit einem Flansch (23), wobei eine Fläche des Flanschs (23) und eine Fläche auf der Welle (22) eine Beschichtung aufweisen;
eine Folie (26), welche dazu angeordnet ist, auf der Fläche des Flanschs (23) aufzuliegen; und
einen Zapfen (24), welcher auf der Welle (22) angeordnet ist,
wobei der Zapfen (24) und die mindestens eine Folie (26) bezogen auf die Welle (22) stationär sind, und die Welle (22) dazu konfiguriert ist, sich bezogen auf den Zapfen (24) und die Folie (26) zu drehen, und **dadurch gekennzeichnet, dass** die Folie (26) mit selbstschmierenden organischen Polymeren bereitgestellt ist und die Beschichtung auf der Fläche des Flanschs und der Welle eine wolframcarbidbasierte Beschichtung ist.

2. Luftlager nach Anspruch 1, wobei die Beschichtung Temperaturen von bis zu ungefähr 398,89 Grad C (750 Grad F) standhalten kann.

3. Luftlager nach Anspruch 1 oder 2, wobei die Beschichtung eine Härte von ungefähr 600 Vickers oder mehr aufweist gemäß einem Vickers Mikroindentation-Härtetest laut ASTM E384.

4. Luftlager nach einem der vorstehenden Ansprüche, wobei die Beschichtung mehr als ungefähr 25 Mikrometer (0,001 Zoll) dick ist, und vorzugsweise wobei die Beschichtung zwischen ungefähr 25 und 75 Mikrometer (0,001 und 0,003 Zoll) beträgt.

5. Luftlager nach einem der vorstehenden Ansprüche, wobei das Luftlager (20) zur Verwendung in einem Gasturbinentriebwerk konfiguriert ist.

6. Luftlager nach einem der vorstehenden Ansprüche, wobei die Beschichtung frei von Chrom ist.

7. Verfahren zum Herstellen eines Luftlagers (20) nach Anspruch 1, wobei das Verfahren Folgendes umfasst:
Auftragen einer harten, verschleißresistenten Beschichtung auf mindestens eines von dem Flansch und der Welle eines Luftlagers durch eines von Plasmaspritzen, chemischer Gasphasenabscheidung und physikalischer Gasphasenabscheidung, wobei die Beschichtung eine wolframcarbidbasierte Beschichtung mit Wolframcarbidniederschlägen ist, und durch chemische Gasphasenabscheidung aufgetragen wird, wobei das Verfahren ferner ein Bereitstellen von selbstschmierenden organischen Polymeren auf der Folie umfasst.

8. Verfahren nach Anspruch 7, wobei die Beschichtung selbstschmierend ist.

9. Verfahren nach Anspruch 8, wobei die selbstschmierende Beschichtung ein Drehen von mindestens einem von der Welle und dem Flansch bezogen auf ein stationäres Element erleichtert.

10. Verfahren nach einem der Ansprüche 7-9, wobei die Beschichtung mehr als 25 Mikrometer (0,001 Zoll) dick ist.

## Revendications

1. Palier à air (20), comprenant :
un arbre (22) avec une bride (23), dans lequel une surface de la bride (23) et une surface de l'arbre (22) ont un revêtement ;
une feuille (26) agencée pour venir en butée contre la surface de la bride (23) ; et
un tourillon (24) agencé sur l'arbre (22), dans lequel le tourillon (24) et l'au moins une feuille (26) sont fixes par rapport à l'arbre (22), et l'arbre (22) est configuré pour tourner par rapport au tourillon (24) et à la feuille (26), et
**caractérisé en ce que** la feuille (26) est pourvue de polymères organiques autolubrifiants et le revêtement sur la surface de la bride et de l'arbre est un revêtement à base de carbure de tungstène.

2. Palier à air selon la revendication 1, dans lequel le revêtement peut résister à des températures allant jusqu'à environ 398,89 degrés C (750 degrés F).

3. Palier à air selon la revendication 1 ou 2, dans lequel le revêtement a une dureté d'environ 600 Vickers ou plus selon un essai de dureté par micro-indentation de Vickers selon la norme ASTM E384.

4. Palier à air selon une quelconque revendication précédente, dans lequel le revêtement a une épaisseur supérieure à environ 25 microns (0,001 pouce), et de préférence dans lequel le revêtement a une épaisseur comprise entre environ 25 et 75 microns (0,001 et 0,003 pouce).

5. Palier à air selon une quelconque revendication précédente, dans lequel le palier à air (20) est configuré pour être utilisé dans un moteur à turbine à gaz.

6. Palier à air selon une quelconque revendication précédente, dans lequel le revêtement est exempt de chrome.

7. Procédé de fabrication d'un palier à air (20) selon la revendication 1, le procédé comprenant :
l'application d'un revêtement dur résistant à l'usure sur au moins l'un de la bride et de l'arbre d'un palier à air par l'un parmi la projection au plasma, le dépôt chimique en phase vapeur et le dépôt physique en phase vapeur, dans lequel le revêtement est un revêtement à base de carbure de tungstène avec des précipités de carbure de tungstène et est appliqué par dépôt chimique en phase vapeur, le procédé comprenant en outre la fourniture de polymères organiques autolubrifiants sur la feuille.

8. Procédé selon la revendication 7, dans lequel le revêtement est autolubrifiant.

9. Procédé selon la revendication 8, dans lequel le revêtement autolubrifiant facilite la rotation d'au moins l'un de l'arbre et de la bride par rapport à un élément fixe.

10. Procédé selon l'une quelconque des revendications 7 à 9, dans lequel le revêtement a une épaisseur supérieure à environ 25 microns (0,001 pouce).
